(19) Europäisches Patentamt / European Patent Office / Office européen des brevets

(11) **EP 2 583 996 A1**

(12) **EUROPEAN PATENT APPLICATION**
published in accordance with Art. 153(4) EPC

(43) Date of publication:
**24.04.2013 Bulletin 2013/17**

(51) Int Cl.:
*C08J 9/00* (2006.01)   *B01D 39/16* (2006.01)
*B01D 71/36* (2006.01)   *B32B 5/32* (2006.01)
*B32B 27/30* (2006.01)   *B32B 37/10* (2006.01)

(21) Application number: **11795336.4**

(22) Date of filing: **11.05.2011**

(86) International application number:
**PCT/JP2011/002627**

(87) International publication number:
**WO 2011/158428 (22.12.2011 Gazette 2011/51)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **15.06.2010 JP 2010136118**

(71) Applicant: **Nitto Denko Corporation
Osaka 567-8680 (JP)**

(72) Inventor: **SHIMATANI, Shunichi
Ibaraki-shi
Osaka 567-8680 (JP)**

(74) Representative: **Hart-Davis, Jason et al
Cabinet Beau de Loménie
158, rue de l'Université
75340 Paris Cedex 07 (FR)**

(54) **POLYTETRAFLUOROETHYLENE POROUS MEMBRANE WITH SMALL ELONGATION ANISOTROPY AND PROCESS FOR PRODUCTION THEREOF**

(57)   The present invention provides a polytetrafluoroethylene (PTFE) porous membrane having, when an arbitrary in-plane direction of the membrane is taken as a first direction, and an in-plane direction orthogonal to the first direction is taken as a second direction, a strength of 20 N/mm$^2$ or more, an elongation percentage at breakage of 200% or less, and a ratio of the elongation percentage in the second direction with respect to the elongation percentage in the first direction of 0.5 to 2.0, in a tensile test performed in the first direction and in the second direction. The PTFE porous membrane of the present invention is less elongated due to an external force and has small anisotropy in elongation.

FIG.1

EP 2 583 996 A1

**Description**

TECHNICAL FIELD

The present invention relates to a polytetrafluoroethylene (PTFE) porous membrane having a layered structure, more specifically, to a PTFE porous membrane that is less likely to deform due to an external force.

BACKGROUND ART

PTFE porous membranes, generally, are produced by subjecting a PTFE sheet flattened by pressure to sequential or simultaneous biaxial stretching. PTFE porous membranes have numerous pores and can be used, for example, as a filtration membrane or a waterproof sound-transmitting membrane. However, PTFE porous membranes have the property of being likely to elongate when an external force is applied. For this reason, PTFE porous membranes deform due to the pressure applied during use for filtration, etc., and pore sizes in such membranes are susceptible to the influence. When a PTFE porous membrane is laminated on a substrate, the PTFE porous membrane deforms due to the tension applied thereto through the lamination, and the pore sizes are likely to vary. Such variation in pore sizes can lead to a reduction in the filtration performance or particle-collecting performance of the PTFE porous membrane. Application of a large external force to the PTFE porous membrane also can cause collapse of the pores in some cases. As described above, since PTFE porous membranes are likely to elongate due to an external force and the dimensional stability thereof is low, the membrane properties easily deteriorate.

Patent Literature 1 and Patent Literature 2 disclose that a PTFE porous membrane is heated at a temperature equal to or higher than the melting point of PTFE before or after being stretched, for the purpose of improving the dimensional stability or strength of the PTFE porous membrane.

Patent Literature 3 discloses that stretching is performed in the state where two or more PTFE porous membranes are stacked, in order to reduce defects in the PTFE porous membranes. Patent Literature 3 points out that a process in which a product is obtained by stacking porous membranes that have been stretched beforehand is not suitable, because it may result in an increase in the number of steps or damage occurring during stacking (see paragraph 0018).

Patent Literature 4 discloses that a PTFE porous membrane is compressed, for the purpose of improving the surface smoothness, etc., of the PTFE porous membrane, through it is not directly associated with the dimensional stability. Patent Literature 5 discloses that a PTFE porous membrane is heated at 300°C or higher while being brought into close contact with a solid structure in the form of a mesh such as a metal mesh, in order to improve the tear strength or tensile strength.

CITATION LIST

Patent Literatures

Patent Literature 1: JP 3(1991)-174452 A
Patent Literature 2: JP 2000-513648 T
Patent Literature 3: JP 7(1995)-292144A
Patent Literature 4: JP 2002-275280 A
Patent Literature 5: JP 7(1995)-82399 A

SUMMARY OF INVENTION

Technical Problem

Even with the above-mentioned techniques, the improvements in dimensional stability of PTFE porous membranes are not yet sufficient. PTFE porous membranes tend to have a large difference in elongation percentage depending on the direction of the external force to be applied, that is, a large anisotropy in elongation. This is because porous membranes have a direction that is insusceptible to elongation and a direction that is susceptible to elongation, depending on the state of the sheet flattened by pressure before stretching, the conditions such as the stretching temperature and the stretching ratio, the order of stretching, and the characteristics of the stretching apparatus. Attempts have been made to produce a porous membrane with small anisotropy in elongation by controlling the stretching conditions, many of which however result in an increase in the overall elongation percentage and thus are not practical.

The present invention has been devised in view of such problems, and an object thereof is to provide a PTFE porous membrane that is less elongated due to an external force and has small anisotropy in elongation.

Solution to Problem

That is, the present invention provides a PTFE porous membrane having, when an arbitrary in-plane direction of the membrane is taken as a first direction and an in-plane direction orthogonal to the first direction is taken as a second direction, a strength of 20 N/mm$^2$ or more, an elongation percentage at breakage of 200% or less, and a ratio of the elongation percentage in the second direction with respect to the elongation percentage in the first direction of 0.5 to 2.0, in a tensile test conducted in the first direction and the second direction.

The tensile test is performed, using a sample with a length in a measurement direction set to 5 cm and a length in a direction perpendicular to the measurement direction set to 1 cm, while the sample is supported by a pair of chucks with an initial distance between the chucks maintained at 2 cm, by separating the pair of chucks from each other at a speed of 20 cm/minute.

From another aspect, the present invention provides a process for producing a PTFE porous membrane. In the process, a stack including at least two PTFE porous membranes that have been made porous by biaxial stretching in a state where an in-plane direction of one of the membranes in which an elongation percentage at breakage in the tensile test is minimum is substantially orthogonal to an in-plane direction of the other of the membranes in which an elongation percentage at breakage in the tensile test is minimum is pressurized under heating to a temperature equal to or higher than the crystal melting temperature of PTFE so as to be integrated.

Advantageous Effects of Invention

The PTFE porous membrane of the present invention has a strength of 20 N/mm$^2$ or more and an elongation percentage of 200% or less, and therefore is less likely to deform due to an external force, as well as having small anisotropy in elongation percentage.

In the process for producing a PTFE porous membrane of the present invention, at least two PTFE porous membranes are stacked so that the respective in-plane directions of the membranes in which an elongation percentage is minimum make an angle of about 90° with respect to each other, and then integrated. Therefore, a PTFE porous membrane with small anisotropy in elongation is obtained.

BRIEF DESCRIPTION OF DRAWINGS

Fig. 1 is a view schematically showing the cross section of a PTFE porous membrane according to an embodiment of the present invention.
Fig. 2 is a view schematically showing the cross section of a PTFE porous membrane according to another embodiment of the present invention.
Fig. 3 is a view schematically showing the cross section of a PTFE porous membrane according to still another embodiment of the present invention.
Fig. 4 is a view schematically showing the cross section of a PTFE porous membrane according to further another embodiment of the present invention.

DESCRIPTION OF EMBODIMENTS

The PTFE porous membrane of the present invention can be produced, for example, by stacking at least two PTFE membranes made porous by biaxial stretching. Hereinafter, a single layer PTFE porous membrane before the stacking is referred to as a "PTFE stretched membrane,", for convenience of description. The PTFE stretched membrane can be produced, for example, by the below-described process.

First, a PTFE resin is mixed with a hydrocarbon-based forming aid and is then extruded into the form of a sheet or cylinder. Thereafter, the resultant is flattened by pressure to a specific thickness, followed by drying. Thus, a PTFE sheet flattened by pressure is obtained.

It is possible to facilitate these extrusion and flattening steps by heating at 30 to 100°C, preferably 35 to 80°C in such steps.

A shear stress is applied to the resin in the extrusion step, generally, by allowing the resin mixed with a forming aid to pass from a cylinder for extrusion through an aperture with a diameter of 1/10 to 1/100 of the diameter of this cylinder. The elongation percentage and strength of the PTFE stretched membrane is determined to some extent by the ratio of the diameter of the aperture (aperture ratio) with respect to that of the cylinder.

In the flattening step, the dimensions of the PTFE sheet are adjusted by rolling or pressing. In the case of flattening with rolls, it is possible to adjust the width and thickness of the PTFE sheet to be flattened, for example, by varying the tension to be applied in winding-up through the rolls, or by a plurality of times of flattening with rolls while slightly varying the gap between each pair of rolls, not by forming it into the specific thickness by a one-time flattening. Drying of the PTFE sheet is performed by heating, generally, to 100°C to 300°C, in order to remove the forming aid contained in the PTFE sheet.

Subsequently, the PTFE sheet flattened by pressure is biaxially stretched at a specific temperature and a specific stretching ratio and is subjected to a sintering step. Thus, a porous PTFE stretched membrane is obtained. The biaxial stretching may be simultaneous biaxial stretching, or may be sequential biaxial stretching, for example, in which stretching in the length direction (longitudinal stretching) is first performed, and then stretching in the width direction (lateral stretching) is performed. In this case, the longitudinal stretching is performed, for example, at a temperature of 100 to 380°C with a stretching ratio of 2 to 20. The lateral stretching is performed, for example, at a temperature of 30 to 380°C with a stretching ratio of 5 to 30. The in-plane direction of the PTFE stretched membrane in which the elongation percentage of the membrane at breakage is minimum is determined depending on the conditions, such as the state of the PTFE sheet before being biaxially stretched, which of the stretching ratios for the longitudinal stretching and lateral stretching is to be made larger, and the like.

The sintering step may be performed while the longitudinal stretching or lateral stretching is performed, or may be performed after the completion of the longitudinal stretching and lateral stretching. Sintering is performed by heating the PTFE sheet to a temperature equal to or higher than the crystal melting temperature of PTFE, that is, 327°C or higher. The sintering temperature is preferably 350 to 400°C. Duration of sintering is not particularly limited. However, in order to render PTFE into the below-described partially sintered state, it is preferably 10 to 400 seconds in the case of employing the above-mentioned preferable sintering temperature.

The sintering step is preferably performed so that the PTFE stretched membrane obtained through the sintering step is rendered into a partially sintered state. PTFE in the sintered state shows a heat absorption peak associated with crystal melting in the range of 327±5°C, as measured by differential scanning calorimetry (DSC). The position of the heat absorption peak is determined based on the position of the top of the heat absorption peak. In the case where PTFE is in an unsintered state, the above-mentioned heat absorption peak is observed on the higher-temperature side than the above-mentioned range in DSC. In a partially sintered state, the above-mentioned heat absorption peak splits into two peaks, or spreads widely, in DSC. The crystal melting enthalpy according to the above-mentioned absorption peak in DSC tends to decrease as sintering proceeds. In this description, the partially sintered state of PTFE is described with reference to this crystal melting enthalpy. Specifically, when the crystal melting enthalpy in DSC at a temperature rise rate of 10°C/minute is 35 to 70 J/g, PTFE is determined to be in a partially sintered state. The above-mentioned crystal melting enthalpy of the PTFE stretched membrane obtained through the sintering step is preferably 35 to 70 J/g, more preferably 37 to 70 J/g.

When PTFE is in a sintered state, the heat absorption peak associated with crystal melting is present in the range of 327±5°C, and the absorption enthalpy (crystal melting enthalpy) of the heat absorption peak is less than 35 J/g. The PTFE stretched membrane in a sintered state may cause separation due to a failure of integration in the subsequent stacking step. The PTFE stretched membrane in an unsintered state lacks dimensional stability, and thus handling thereof may be inconvenient in some cases.

The PTFE porous membrane of the present invention can be produced by the process described below, using the PTFE stretched membrane obtained above. First, at least two PTFE stretched membranes are stacked so that an in-plane direction of one of the PTFE stretched membranes in which an elongation percentage at breakage is minimum (which may hereinafter be referred to as a "minimum elongation direction"; likewise, an in-plane direction in which an elongation percentage is maximum may hereinafter be referred to as a "maximum elongation direction") is substantially orthogonal to an in-plane direction of the other of the PTFE stretched membranes in which an elongation percentage at breakage is minimum. Thus, a PTFE stack is obtained. This PTFE stack is pressurized under heating at a temperature equal to or higher than the crystal melting temperature of PTFE, that is, 327°C or higher, thereby integrating the PTFE stack. Thus, the PTFE porous membrane of the present invention is obtained.

In this description, the phrase "a direction is substantially orthogonal to a direction" means that the two directions make an angle of about 90°, specifically, 85° to 95°, preferably 87° to 93°, with respect to each other. In the abode-mentioned production process, in the case of stacking at least two PTFE stretched membranes, the angle made by the minimum elongation directions of the PTFE stretched membranes with respect to each other is not necessarily strictly 90°, and needs only to be in the above-mentioned range. As long as this angle is in the above-mentioned range, it is possibly to obtain the PTFE porous membrane of the present invention.

The minimum elongation directions of the PTFE stretched membranes can be determined by subjecting the PTFE stretched membranes to a tensile test. The heating and pressurizing of the PTFE stack can be performed by a method such as hot pressing and hot rolling. For the techniques of stacking, heating, and pressurizing, Patent Literatures 3 to 5, for example, can be referred to.

The PTFE porous membrane to be obtained by integrating the PTFE stack is preferably brought into a sintered state (completely sintered state). Accordingly, the heating temperature for integration is preferably equal to or higher than the crystal melting temperature of PTFE. The heating duration suitable for bringing the PTFE stretched membrane from a partially sintered state to a completely sintered state varies depending on the degree of pressurization, etc., but for example, is 0.2 minute to 5.0 minutes. The PTFE porous membrane in a completely sintered state has a heat absorption peak associated with crystal melting only in the range of 327±5°C, and the absorption enthalpy of this heat absorption peak is less than 35 J/g, in differential scanning calorimetry (DSC) at a temperature rise rate of 10°C/minute. This can prevent separation from occurring in the integrated PTFE stack, that is, PTFE porous membrane.

The porosity of the PTFE porous membrane is preferably 50% or more. This allows the PTFE porous membrane to be used suitably for filtration or as a filter. Further, the thickness of the PTFE porous membrane is preferably at least 5 $\mu$m, in view of the workability in handling the PTFE porous membrane. A preferred PTFE porous membrane according to the present invention has a porosity of 50% or more and a thickness of 5 $\mu$m or more. Furthermore, the permeation of the PTFE porous membrane is preferably 0.01 to 200 sec/100 mL, more preferably 0.05 to 100 sec/100 mL, further preferably 0.05 to 70 sec/100 mL, in terms of Gurley number. These properties can be controlled by adjusting the conditions in the step of producing the PTFE stretched membranes and the step of integrating the PTFE stack.

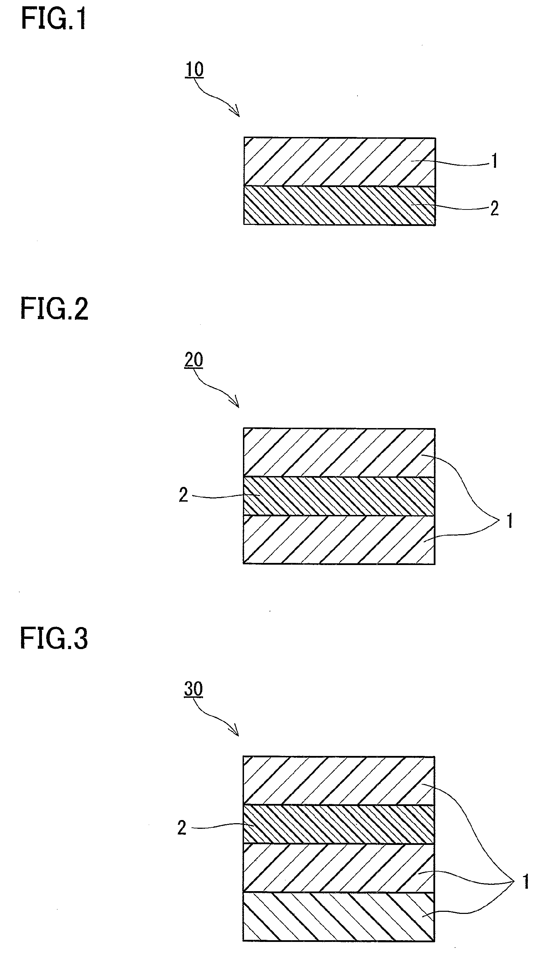

Fig. 1 shows a schematic sectional view of a PTFE porous membrane 10 of the present invention. In the PTFE porous membrane 10, two PTFE stretched membranes 1 and 2 are stacked and integrated. The minimum elongation direction of the PTFE stretched membrane 2 makes an angle of 90° with respect to the minimum elongation direction of the PTFE stretched membrane 1. The maximum elongation direction and the minimum elongation direction in a PTFE stretched membrane obtained by biaxial stretching are orthogonal to each other. Therefore, in the PTFE porous membrane 10, the maximum elongation direction of the PTFE stretched membrane 1 coincides with the minimum elongation direction of the PTFE stretched membrane 2, and the minimum elongation direction of the PTFE stretched membrane 1 coincides with the maximum elongation direction of the PTFE stretched membrane 2. Thus, the anisotropy in elongation percentage at breakage is reduced. In the case where the membranes are stacked as described above, the PTFE porous membrane 10 to be obtained has two directions between which the difference in elongation percentage at breakage of the membrane is maximum, that is, the maximum elongation direction of the PTFE stretched membrane 1 (the minimum elongation direction of the PTFE stretched membrane 2) and the minimum elongation direction of the PTFE stretched membrane 1 (the maximum elongation direction of the PTFE stretched membrane 2). Accordingly, when the difference in elongation percentage at breakage between the above-mentioned two directions of the PTFE porous membrane 10 falls within the range of 0.5 to 2.0, expressed as a ratio of one elongation percentage with respect to the other, the above-mentioned ratio of elongation percentages at breakage in arbitrary two directions of the PTFE porous membrane 10 falls within the range of 0.5 to 2.0.

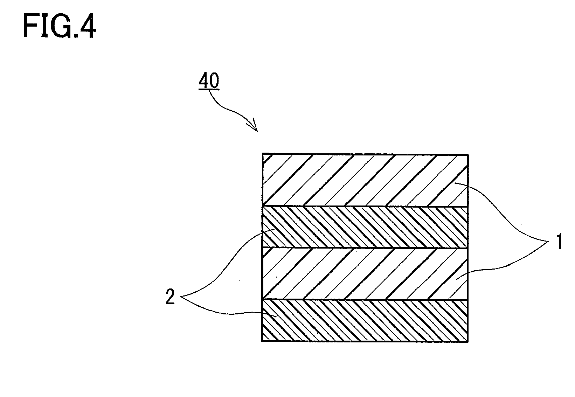

The number of PTFE stretched membranes to be stacked in the PTFE porous membrane needs only to be at least two. Examples of the structure of the PTFE porous membrane include the structures shown in Figs. 2 to 4 in addition to the structure of Fig. 1. In a PTFE porous membrane 20 shown in Fig. 2, three PTFE stretched membranes 1, 2, and 1 are stacked and integrated so that the respective directions in planes of an adjacent pair of stretched membranes 1 and 2 in which an elongation percentage at breakage is minimum make an angle of 90° with respect to each other. In a PTFE porous membrane 30 shown in Fig. 3, four PTFE stretched membranes 1, 2, 1, and 1 are stacked and integrated, among which the upper three PTFE stretched membranes 1, 2, and 1 are stacked and integrated as described above for those in Fig. 2. Also in a PTFE porous membrane 40 shown in Fig. 4, four PTFE stretched membranes 1, 2, 1, and 2 are stacked and integrated so that the respective direction in planes of an adjacent pair of stretched membranes 1 and 2 in which an elongation percentage at breakage is minimum make an angle of 90° with respect to each other.

The PTFE porous membrane of the present invention shows a strength, as measured in a tensile test, of at least 20 N/mm$^2$, preferably at least 23 N/mm$^2$, more preferably at least 25 N/mm$^2$, in an arbitrary direction in a plane of the membrane. Further, the PTFE porous membrane of the present invention has an elongation percentage at breakage, as measured in the tensile test, of 200% or less, preferably 180% or less, more preferably 150% or less, in an arbitrary direction in a plane of the membrane. The minimum value and maximum value of these properties of the PTFE porous membrane appear in the maximum elongation direction or the minimum elongation direction of the stretched membranes 1 and 2, and therefore the ranges of the respective properties can be specified by measuring the properties of the PTFE porous membrane in these two directions.

Furthermore, when an arbitrary direction in a plane of the membrane is taken as a first direction, and an in-plane direction orthogonal to the first directions is taken as a second direction, the PTFE porous membrane of the present invention shows a ratio of the elongation percentage in the second direction with respect to the elongation percentage in the first direction of 0.5 to 2.0, preferably 0.6 to 1.8, more preferably 0.7 to 1.5. As described above, the PTFE porous membrane of the present invention has small anisotropy in elongation.

EXAMPLES

Hereinafter, the present invention is described in detail with reference to examples and comparative examples. However, the present invention is not limited to the following examples. First, the tensile test, methods for measuring air permeability and porosity, and differential scanning calorimetry are described.

(Tensile test)

A sample in a rectangular shape of 1 cm $\times$ 5 cm was cut out from a membrane. This sample was placed in an autograph manufactured by SHIMADZU CORPORATION so that the length direction of the sample matched the tensile direction with an initial distance between chucks set to 2 cm. Then, the sample was drawn until it broke, under conditions of an atmospheric temperature of 25°C and a tensile speed of 20 cm/minute. The elastic modulus of the sample at an elongation percentage of 5%, and the elongation percentage and strength thereof (maximum strength) at breakage were measured. The elongation percentage and strength were calculated respectively from the following formulae (1) and (2). In formula (2), the "Cross-sectional area (thickness $\times$ width of sample)" is a product of the thickness of the sample before measurement and the width (10 mm) of the sample before measurement, that is, the initial cross-sectional area of the sample before measurement.
(Formula 1)

$$\text{Elongation percentage [\%]} = (\text{Distance between chucks at breakage} \cdot \text{Initial distance between chucks}) \div \text{Initial distance between chucks} \times 100 \quad (1)$$

(Formula 2)

$$\text{Strength [N/mm}^2\text{]} = \text{Stress at breakage [N]} \div \text{Cross-sectional area (thickness} \times \text{width of sample) [mm}^2\text{]} \quad (2)$$

(Air permeability)

Gurley number of the sample of the membrane was measured using the Gurley permeability tester prescribed in Japan industrial standard (JIS) P 8117.

(Porosity)

The thickness and weight of the sample of the membrane punched into a circle with a diameter of 47 mm were measured, and the porosity thereof was calculated from formula (3) below. In formula (3), the numerical value 17.3 [cm$^2$] is the area of the circle with a diameter of 47 mm, and the numerical value 2.18 [g/cm$^3$] is the specific gravity of the sintered PTFE resin.
(Formula 3)

$$\text{Porosity [\%]} = \{1 \cdot \text{Weight [g]} \div (\text{Thickness [cm]} \times 17.3 \text{ [cm}^2\text{]} \times 2.18 \text{ [g/cm}^3\text{]})\} \times 100 \quad (3)$$

(Differential scanning calorimetry (DSC))

DSC200F3, manufactured by NETZSCH, was used as a measuring apparatus. About 10 mg of the sample of the membrane punched into a circle with a diameter of 2 mm was put into an aluminum cell for measurement. DSC was performed the following conditions. The temperature thereof was increased at a temperature rise of 20°C/minute to 200°C, and was maintained at 200°C for five minutes. Thereafter, the temperature was further increased at a temperature rise of 10°C/minute. The crystal melting enthalpy was determined by the area of the heat absorption peak.

(PTFE stretched membrane A)

F104, manufactured by DAIKIN INDUSTRIES, LTD., was used as a PTFE resin, and ISOPAR M (Exxon Mobil Corporation) was used as a hydrocarbon-based forming aid. The hydrocarbon-based forming aid was added to the PTFE resin at 20wt%, which was extruded at a temperature of 50°C and an aperture ratio of 1/50. Thus, a 1-mm thick x 10-cm wide flat sheet was obtained. Further, the sheet was flattened to a thickness of 0.2 mm, using two rolls, without changing the width of the sheet by adjusting the gap the rolls. Thereafter, it was dried at 200°C to the forming aid. Thus, a PTFE sheet flattened by pressure obtained. This PTFE sheet was stretched 10-fold in the length direction at 300°C, and was then stretched 10-fold in the width direction at 300°C. Further, the stretched PTFE sheet was maintained at 380°C for 30 seconds with its four corners fixed. Thus, a PTFE stretched membrane A was obtained. Table 1 shows the properties of the PTFE stretched membrane A. The elongation percentage of the PTFE stretched membrane A was minimum in the length direction, which was 50%.

Table 1

| PTFE stretched membrane | Thickness | Porosity | Strength (N/mm$^2$) | | Elongation percentage (%) | | Gurley number | Crystal melting enthalpy |
|---|---|---|---|---|---|---|---|---|
| | (μm) | (%) | Length direction | width direction | Length direction | Width direction | (sec/100mL) | (J/g) |
| Stretched membrane A | 45 | 91 | 31 | 4.4 | 50 | 560 | 1.1 | 51 |
| stretched membrane B | 25 | 88 | 12 | 44 | 620 | 60 | 0.5 | 38 |

(PTFE membrane B)

F104, manufactured by DAIKIN INDUSTRIES, LTD., was used as a PTFE resin, and ISOPAR M (Exxon Mobil Corporation) was used as a hydrocarbon-based forming aid. The hydrocarbon-based forming aid was added to the PTFE resin at 20wt%, which was extruded at a temperature of 50°C and aperture ratio of 1/50 into a columnar shape with a diameter af 8 mm. This was cut into a length of 20 cm, and subjected to pressing at a temperature of 50°C and a pressure af 180 kN. At this time, the thickness was 0.15 mm, and the maximum width was 15 cm. Thereafter, it was dried at 150°C to remote the forming aid. Thus, a PTFE sheet flattened by pressure was obtained. This PTFE sheet was stretched 10-fold in the length direction at 300°C, and was then stretched 10-fold in the width direction at 300°C. Further, the stretched PTFE sheet was maintained at 380°C for 30 seconds with its four corners fixed. Thus, a PTFE stretched membrane B was obtained. Table 1 shows the properties of the PTFE stretched membrane B. The elongation percentage of the PTFE stretched membrane B was minimum in the width direction, which was 60%.

(Example 1)

Two pieces of the PTFE stretched membrane A were stacked so that the length directions of the two pieces should make an angle of 90° with respect to each other. Thus, a PTFE stack was obtained. This PTFE stack was subjected to 350°C for five minutes under a pressure of 0.2 MPa to be integrated. Thus, a PTFE porous membrane was obtained. Table 2 shows the properties of this PTFE porous membrane. As shown in Table 2, the elongation percentage in a direction in which the elongation percentage at breakage of the PTFE porous membrane was maximum, that is, in the width direction was up to 102%. The ratio of the elongation percentage in the length direction with respect to that in the width direction was 0.86, resulting in elongation anisotropy.

Table 2

| PTFE porous membrane | Thickness (μm) | Porosity (%) | Strength (N/mm²) | | Elongation percentage (%) | | Gurley number (sec/100mL) | Crystal melting enthalpy (J/g) | Peak temperature (°C) |
|---|---|---|---|---|---|---|---|---|---|
| | | | Length direction, | Width direction | Length direction, | Width direction, | | | |
| Ex. 1 | 52 | 68 | 31 | 35 | 88 | 102 | 3.8 | 30 | 327 |
| Ex. 2 | 29 | 70 | 45 | 38 | 110 | 87 | 1.7 | 25 | 327 |
| Ex. 3 | 45 | 72 | 33 | 33 | 98 | 110 | 2.5 | 26 | 327 |
| Ex. 4 | 67 | 61 | 46 | 37 | 47 | 51 | 1.9 | 31 | 327 |
| C. Ex. 1 | 28 | 76 | 75 | 16 | 61 | 220 | 2 | 24 | 327 |
| C. Ex. 2 | 25 | 81 | 18 | 64 | 280 | 54 | 1.1 | 27 | 327 |

(Example 2)

Two pieces of the PTFE stretched membrane B were stacked so that the length directions of the two pieces should make an angle of 90° with respect to each other. Thus, a PTFE stack was obtained. This PTFE stack was subjected so 350°C for five minutes under a pressure of 0.2 MPa to be integrated. Thus, a PTFE porous membrane was obtained. Table 2 shows the properties of this PTFE porous membrane. As shown in Table 2, the elongation percentage in a direction in which the elongation percentage at breakage of the PTFE porous membrane was maximum, that is, in the length direction was up to 110%. The ratio of the elongation percentage in the length direction with respect to that in the width direction was 1.26, resulting in small elongation anisotropy.

(Example 3)

One piece of the PTFE stretched membrane A and one piece of the PTFE stretched membrane B were stacked so that the length direction (the minimum elongation direction) of the PTFE stretched membrane A coincided with the length direction (the maximum elongation direction) of the PTFE stretched membrane B. Thus, a PTFE stack was obtained. This PTFE stack was subjected to 350°C for five minutes under a pressure of 0.2 MPa to be integrated. Thus, a PTFE porous membrane was obtained. Table 2 shows the propertied of this PTFE porous membrane. As shown in Table 2, the elongation percentage in the maximum elongation direction of the PTFE porous membrane, that is, in the width direction was up to 110%. The ratio of the elongation percentage in the length direction with respect to that in the width direction was 0.89, resulting in small elongation anisotropy.

(Example 4)

Four pieces of the PTFE stretched membrane B were stacked so that the width directions (the minimum elongation directions) of an adjacent pair of the pieces of the PTFE stretched membrane B should make an angle of 90° with respect to each other. Thus, a PTFE stack was obtained. This PTFE stack was subjected to 350°C for five minutes under a pressure of 0.4 MPa to be integrated. Thus, a PTFE porous membrane was obtained. Table 2 shows the properties of this PTFE porous membrane. As shown in Table 2, the elongation percentage in a direction in which the elongation percentage at breakage of the PTFE porous membrane was maximum, that is, in the width direction was up to 51%. The ratio of the elongation percentage in the length direction with respect to that in the width direction was 0.92, resulting in small elongation anisotropy.

(Comparative Example 1)

One piece of the PTFE stretched membrane A was heated and pressurized at a temperature of 350°C for five minutes under a pressure of 0.4 MPa. Thus, a PTFE membrane was obtained. Table 2 shows the properties of this PTFE membrane. As shown in Table 2, the elongation percentage in a direction in which elongation percentage at breakage of the PTFE membrane was maximum, that is, in the width direction was 220%, which exceeded 200%. The ratio of the elongation percentage in the length direction with respect to that in the width direction was 0.28, resulting in large elongation anisotropy.
Further, this PTFE membrane was heated and pressurized at a temperature of 360°C under a pressure of 0.8 MPa for five minutes. As a result, elongation percentage of the PTFE membrane in the width direction was reduced to 56%. However, its thickness was 18 $\mu$m and its porosity was 20%, resulting in an impermeable transparent membrane.

(Comparative Example 2)

One piece of the PTFE stretched membrane B was heated and pressurized at a temperature of 350°C under a pressure of 0.2 MPa for five minutes. Thus, a PTFE membrane was obtained. Table 2 shows the properties of this PTFE membrane. As shown in Table 2, the elongation percentage in a direction in which the elongation percentage at breakage of the PTFE membrane was maximum, that is, in the length direction was 280%, which exceeded 200%. The ratio of the elongation percentage in the length direction with respect to that in the width direction was 5.19, resulting in large elongation anisotropy.
Further, this PTFE membrane was heated and pressurized at a temperature of 360°C under a pressure of 0.8 MPa for five minutes. As a result, the elongation percentage of the PTFE membrane in the length direction was reduced to 50%. However, its thickness was 6 $\mu$m and its porosity was 25%, resulting in an almost impermeable transparent membrane.

INDUSTRIAL APPLICABILITY

The PTFE porous membrane of the present invention is suitable for use intended for waterproofing, dust proofing, filtration, etc., in the field such as automobiles, OA parts, home appliances, medical care, and semiconductors.

**Claims**

1. A polytetrafluoroethylene porous membrane having, when an arbitrary in-plane direction of the membrane is taken as a first direction and an in-plane direction orthogonal to the first direction is taken as a second direction:

   a strength of 20 N/mm$^2$ or more,
   an elongation percentage at breakage of 200% or less, and
   a ratio of the elongation percentage in the second direction with respect to the elongation percentage in the first direction of 0.5 to 2.0, in a tensile test conducted in the first direction and the second direction, wherein
   the tensile test is performed, using a sample with a length in a measurement direction set to 5 cm and a length in a direction perpendicular to the measurement direction set to 1 cm, while the sample is supported by a pair of chucks with an initial distance between the chucks maintained at 2 cm, by separating the pair of chucks from each other at a speed of 20 cm/minute.

2. The polytetrafluoroethylene porous membrane according to claim 1, wherein
   a heat absorption peak associated with crystal melting is present only in a range of 327$\pm$5°C, and an absorption enthalpy of the heat absorption peak is less than 35 J/g, in differential scanning calorimetry at a temperature rise rate of 10°C/minute.

3. The polytetrafluoroethylene porous membrane according to claim 1, having a thickness of 5 $\mu$m or more and a porosity of 50% or more.

4. The polytetrafluoroethylene porous membrane according to claim 1, having a permeation of 0.01 to 200 sec/100 mL, in terms of Gurley number.

5. A process for producing a polytetrafluoroethylene porous membrane, comprising the step of:

   pressurizing a stack including at least polytetrafluoroethylene porous membranes that have been made porous by biaxial stretching in a state where an in-plane direction of one of the membranes in which an elongation percentage at breakage in a tensile test is minimum is substantially orthogonal to an in-plane direction of the other of the membranes in which an elongation percentage at breakage in the tensile test is minimum, under heating to a temperature equal to or higher than a crystal melting temperature of polytetrafluoroethylene so as to be integrated, wherein
   the tensile test is performed, using a sample with a length in a direction set to 5 cm and a length in a direction perpendicular to the measurement direction set to 1 cm, while the sample is supporter by a pair of chucks with an initial distance between the chucks maintained at 2 cm, by separating the pair of chucks from each other at a speed of 20 cm/minute.

6. The for producing a polytetrafluoroethylene porous membrane according to claim 5, wherein
   the at least two polytetrafluoroethylene porous membranes that have been made porous by biaxial stretching have a crystal melting enthalpy of at least 35 J/g and not more than 70 J/g, as measured by differential scanning calorimetry at a temperature rise rate of 10°C/minute.

FIG.1

10

1

2

FIG.2

20

2

1

FIG.3

30

2

1

FIG.4

<table>
<tr><td colspan="2">**INTERNATIONAL SEARCH REPORT**</td><td colspan="2">International application No.<br>PCT/JP2011/002627</td></tr>
</table>

A. CLASSIFICATION OF SUBJECT MATTER
*C08J9/00*(2006.01)i, *B01D39/16*(2006.01)i, *B01D71/36*(2006.01)i, *B32B5/32* (2006.01)i, *B32B27/30*(2006.01)i, *B32B37/10*(2006.01)i

According to International Patent Classification (IPC) or to both national classification and IPC

B. FIELDS SEARCHED

Minimum documentation searched (classification system followed by classification symbols)
C08J9/00-9/42, B01D39/00-41/04, B01D71/36, B32B1/00-35/00, B29C55/00-55/30

Documentation searched other than minimum documentation to the extent that such documents are included in the fields searched
Jitsuyo Shinan Koho             1922-1996    Jitsuyo Shinan Toroku Koho    1996-2011
Kokai Jitsuyo Shinan Koho    1971-2011    Toroku Jitsuyo Shinan Koho    1994-2011

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X | JP 2004-038075 A  (Japan Gore-Tex Inc.), 05 February 2004 (05.02.2004), claims; paragraphs [0027], [0036], [0040], [0041], [0065] to [0083] (Family: none) | 1-6 |
| A | JP 2003-294181 A  (Japan Gore-Tex Inc.), 15 October 2003 (15.10.2003), entire text (Family: none) | 1-6 |

☒ Further documents are listed in the continuation of Box C.          ☐ See patent family annex.

| | |
|---|---|
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search<br>27 May, 2011 (27.05.11) | Date of mailing of the international search report<br>14 June, 2011 (14.06.11) |
|---|---|
| Name and mailing address of the ISA/<br>Japanese Patent Office | Authorized officer |
| Facsimile No. | Telephone No. |

Form PCT/ISA/210 (second sheet) (July 2009)

**INTERNATIONAL SEARCH REPORT**

International application No.

PCT/JP2011/002627

C (Continuation).    DOCUMENTS CONSIDERED TO BE RELEVANT

| Category* | Citation of document, with indication, where appropriate, of the relevant passages | Relevant to claim No. |
|---|---|---|
| A | JP 5-202217 A  (Daikin Industries, Ltd.), 10 August 1993 (10.08.1993), entire text<br>& US 5234739 A          & EP 611790 A3<br>& EP 525630 A2          & DE 69208552 C<br>& DE 69228002 C          & DE 69208552 D<br>& DE 69228002 D          & ES 2086591 T<br>& ES 2126672 T          & CA 2074349 A<br>& RU 2103283 C          & CA 2435405 A<br>& KR 10-0258485 B          & KR 10-0260966 B<br>& KR 10-0260967 B          & CN 1072351 A<br>& CA 2074349 A1 | 1-6 |
| A | JP 2009-179656 A  (Nitto Denko Corp.), 13 August 2009 (13.08.2009), entire text (Family: none) | 1-6 |

Form PCT/ISA/210 (continuation of second sheet) (July 2009)

**REFERENCES CITED IN THE DESCRIPTION**

**Patent documents cited in the description**

- JP 3174452 A
- JP 2000513648 T
- JP 7292144 A
- JP 2002275280 A
- JP 7001995 A
- JP 82399 A